# EUROPEAN PATENT SPECIFICATION

(11) **EP 2 115 898 B1**
(45) Date of publication and mention of the grant of the patent: **16.02.2011**
(21) Application number: 07859142.7
(22) Date of filing: 20.12.2007
(51) Int. Cl.: H04B 7/185

(54) **MOBILE SATELLITE SERVICE VIA 3GPP GENERIC RACIO ACCESS NETWORK**
MOBIL-SATELLITENDIENST ÜBER EIN GENERISCHES 3GPP-FUNKZUGANGSNETZ
SERVICE MOBILE PAR SATELLITE PAR L'INTERMÉDIAIRE D'UN RÉSEAU D'ACCÈS RADIO GÉNÉRIQUE 3GPP

(30) Priority: 05.01.2007 US 620277
(43) Date of publication of application: 11.11.2009
(73) Proprietor: Telefonaktiebolaget LM Ericsson (publ), 164 83 Stockholm (SE)
(72) Inventor: SYED, Inayat, Richardson, TX 75082 (US)
(74) Representative: HOFFMANN EITLE
(86) International application number: PCT/IB2007/004035
(87) International publication number: WO 2008/084322

(56) References cited:
- EP-A- 1 387 592
- US-A1- 2004 243 680
- US-A1- 2006 116 125

## Description

### BACKGROUND OF THE INVENTION

The present invention relates to satellite communications More particularly, and not by way of limitation, the present invention is directed to a system and method for facilitating mobile satellite service via a Third Generation Partnership Project (3GPP) generic radio access network. As used herein, the abbreviations used herein shall have the following meanings:
- AAA: Authentication, Authorization and Accounting
- AP: Access Point
- ATC: Ancillary Terrestrial Component
- BER: Bit Error Rate
- BSC: Base Station Controller
- BTS: Base Transceiver Station
- CC: Call Control
- CS: Circuit Switched
- EGPRS: Enhanced General Packet Radio Service
- FCC: Federal Communications Commission
- GAN: Generic Access Network
- GANC: Generic Access Network Controller
- GMR: Geo Mobile Radio
- GMR 3G: Geo Mobile Radio with 3G (evolution of GMR1 or GMR2 protocols to support packet access support)
- Gb: Interface between BSC and SGSN
- GPRS: General Packet Radio Service
- GSM: Global System for Mobile Communication
- HBS: Home Base Station
- HBSC: Home Base Station Controller
- HLR: Home Location Register
- HSPA: High Speed Packet Access
- IGW: IP Gateway
- IP: Internet Protocol
- IETF: Internet Engineering Task Force
- LTE: Long Term Evolution
- MAC: Medium Access Control
- MlPv6: Mobile IP version 6
- MM: Mobility Management
- MME: Mobility Management Entity
- MMS: Multimedia Messaging Services
- MS: Mobile Station
- MSS: Mobile Satellite Service
- PCU: Packet Channel Unit
- RLC: Radio Link Control
- RFC: Request for Comments
- RTP: Real Time Protocol
- SAE: System Architecture Evolution
- SGSN: Serving GPRS Support Node
- SGW: Security Gateway
- SMS: Short Messaging Services
- UT: User Terminal
- UMA: Unlicensed Mobile Access
- WCDMA: Wideband Code Division Multiple Access
- XCP: Explicit Control Protocol

The US Federal Communications Commission (FCC) permits MSS spectrum to be used nationwide on the ground for terrestrial networks (under the ATC), provided that Satellite services are also offered. MSS operators are thus able to offer terrestrial mobile telecommunication services using a hybrid satellite/terrestrial UT.

In order to be successful, MSS/ATC operators must be able to leverage the economies of scale of the existing UTs and also the existing mobile communication network infrastructure. While it is possible to implement a system using ETSI GMR1 or GMR2 standards, as derivative of mainstream 3GPP GSM/EGPRS standards, it will likely be cost prohibitive to sustain the satellite component in an integrated UT or mobile communication infrastructure when terrestrial standards continue evolve to later generations.

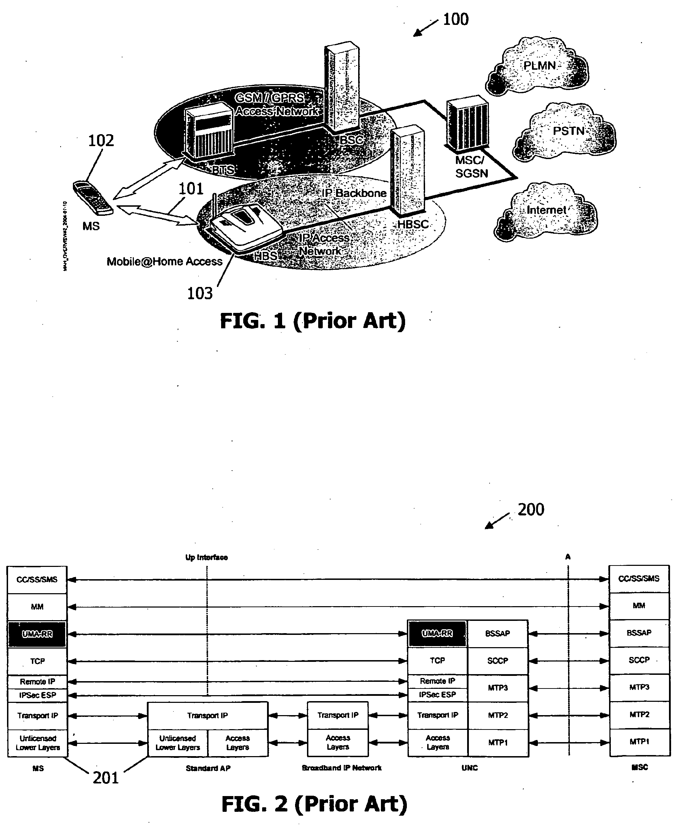

The 3GPP GAN enables end users to use alternative air interface technologies, such as Bluetooth and WiFi, to access mobiles services that otherwise are commonly accessed using WCDMA/GSM/EGPRS networks. One system that illustrates the 3GPP GAN reference architecture is Ericsson's Mobile@Home, system as seen in Figure 1. A 3GPP GAN system enables GSM and GPRS services over the IP backbone and short-range unlicensed radio access technology, such as Bluetooth or WiFi. The end user hence will be able to use the "public" cellular network or the UMA Bluetooth/Wifi pico-cell to access the same voice, GPRS, MMS and/or SMS services.

Figure 1 illustrates a conventional 3GPP GAN system 100. The protocol stacks in the 3GPP GAN standards support end user applications and services transparently across the underlying radio access 101 which are unlicensed lower layers between the MS 102 and AP 103, shown here as a HBS.

Figure 2 illustrates the 3GPP GAN Protocol Stack 200 for a CS domain. The unlicensed lower layers 201 supported by 3GPP GAN are Bluetooth and WiFi. Figure 3 further illustrates the 3GPP GAN unlicensed lower layers for Bluetooth 301 and an 802.11 based wireless network 302.

Conventional MSS systems are based on several air interface standards, including: GMR1, GMR2, Globalstar air interface, Iridium air interface and Inmarsat 14 air interface. Each of these standards is unique, and hence they are non-interoperable. As a result, the MSS is fragmented, making it difficult to leverage economies of scale in the MSS market for UT and the network infrastructure. As a result, the MSS has seen limited market success.

It would thus be advantageous to have a system and method for simpler reference network architecture to support a satellite component as generic access in the terrestrial mobile networks and UTs that overcomes the disadvantages of the prior art. The present invention provides such a system and method.

EP 1 387 592 A relates to a device for taking control of resources in a communication network in order to insert traffic. A data management device for a communication installation including at least one base station having resources and at least one terrestrial node connected to a core network and to the base station to control its resources via an interface includes a control device coupled to a traffic source and to the interface.

US 2004/0243680 A1 relates to system, apparatus, and method for providing multi-application support using a single protocol stack.

US 2006/0116125 A1 describes a system and method for providing operator-differentiated messaging to a wireless user equipment (UE) device.

### BRIEF SUMMARY OF THE INVENTION

The present invention is defined by the independent claims. Advantageous embodiments are described in the dependent claims.

The present invention comprises a system and method for simpler reference network architecture to support a satellite component as generic access in the terrestrial mobile networks. The present invention uses the 3GPP baseline standard, 3GPP GAN, to support a MSS satellite component at the physical, RLC and MAC layers, with the terrestrial standards based in the Generic Access Protocol architecture framework. The present invention seamlessly incorporates satellite component lower layers into the GAN protocol architecture, leveraging the flexibility of the IP transport protocols between the UT or MS and the GAN Radio Access Network to slide in satellite protocol lower layers in the GAN protocol architecture framework. To support this mobility management system across the IP domain, the present invention uses the IETF RFC 4423 protocol for Host Identity protocol and multi-homing support. These additions are transparent to the GAN infrastructure, particularly the UMA GANC.

### BRIEF DESCRIPTION OF THE SEVERAL VIEWS OF THE DRAWING

In the following section, the invention will be described with reference to exemplary embodiments illustrated in the Figures, in which:
FIG. 1 illustrates a conventional 3GPP GAN system;
FIG. 2 illustrates the conventional 3GPP GAN protocol stack for the CS domain;

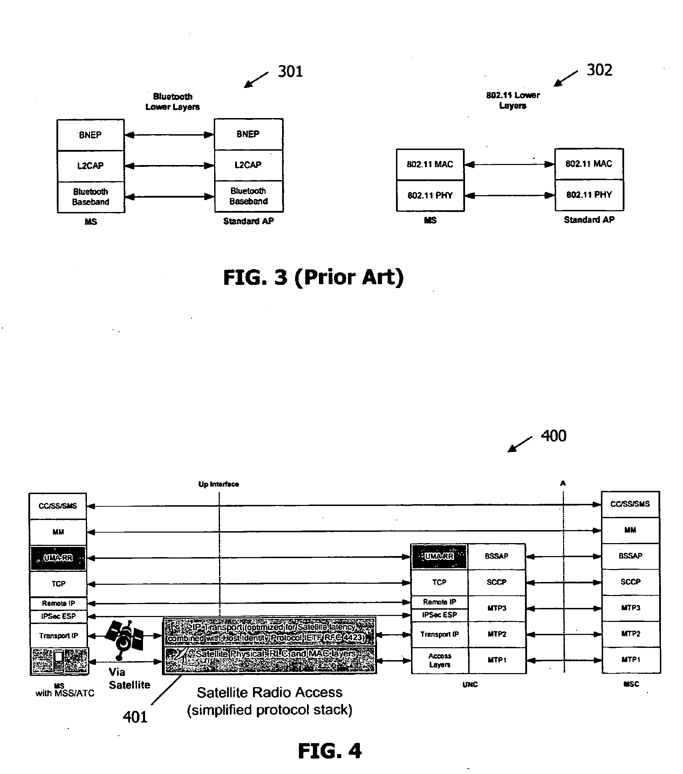

FIG. 3 illustrates the 3GPP GAN-unlicensed lower layers:
FIG. 4 illustrates the 3GPP GAN CS domain protocol layers with satellite access; and

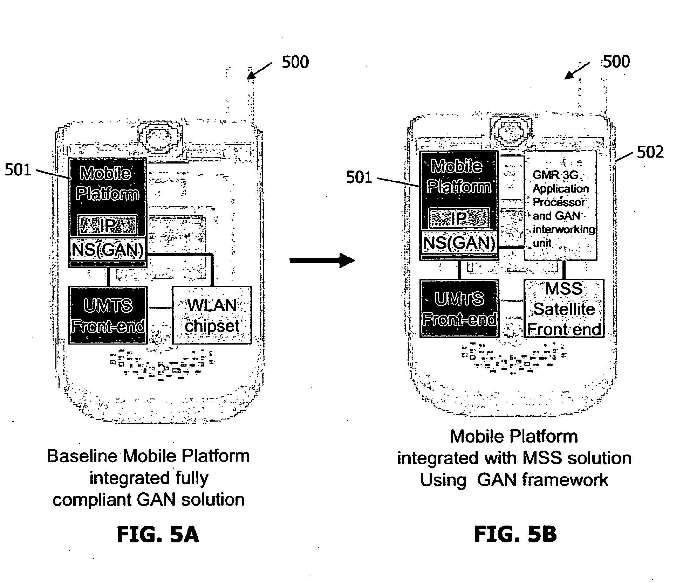

FIGS. 5A and 5B illustrate the 3GPP GAN protocol architecture operable to support satellite enabled handsets with a GAN/MSS inter-working unit.

### DETAILED DESCRIPTION OF THE INVENTION

In the present invention, the 3GPP GAN protocol stack is used to provide access by satellite instead of by Bluetooth or WiFi. This enables the

MSS component to be incorporated into the existing terrestrial UT or MS and network that supports the 3GPP GAN reference architecture. This is seen in Figure 4. As seen therein, the 3GPP GAN CS domain protocol layers with satellite access 400 of the present invention is shown. This provides an example of a protocol instance illustrating how the satellite protocol layers 401 can be introduced in the 3GPP GAN protocol architecture. Figure 4 can be generalized to include other GAN protocol architectures, such as Up interface CS Voice bearer protocol, Up interface GPRS signaling and user plane protocols. In addition, other mechanisms existing in the 3GPP GAN for roving, GAN cell identification and the like can be leveraged for the satellite access as well

Referring now to the satellite protocol lower layers, the present invention provides that the satellite protocol architecture in the 3GPP GAN framework will be comprised of the physical, RLC, MAC and IP transport layers. These will comprise peer to peer protocol layers between the UT or MS and a satellite RBS. The satellite physical, RLC and MAC layers comprise an adaptation of the terrestrial GPRS standards for physical, RLC and MAC layers. The adaptation of the physical, RLC and MAC layers are based on the Ericsson satellite cellular backhaul solutions for Abis over satellite.

Adapting the EGPRS satellite variants for the physical, RLC and MAC layers enables the reuse of the UT or MS EGPRS baseband, and radio frequency electronics with minimal modification. Alternatively, the satellite physical, RLC, MAC layers can be based on proprietary VSAT IP modems technologies.

In one embodiment of the present invention, the satellite link can be optimized for voice calls using a low data rate codec over the GAN user plane without IP overhead. The encapsulation of the codec payload into IP packets with RTP headers can be performed in the satellite BTS as transparent connectivity to the BSC, either the Home BSC or GAN.

The satellite IP transport layer is an important aspect of the satellite RBS protocol stack of the present invention. The satellite IP transport layer contains performance enhancing proxies to combat satellite latencies and also provide a mechanism to appropriately map user locations, Identities to IP addresses and carrier frequencies in the lower layers for UT or MS mobility.

Mobility refers to the ability of the network to provide support for handover to mobile devices such as UTs and MSs as they change point of access. Device mobility can either be addressed at layer 3 of the protocol stack, which means that the IP forwarding mechanism, which is based on. IP addresses with implicit location information, either needs to be changed or the addressing scheme has be modified. In this way, mobility is hidden from higher layer protocols, and the host's IP address remains unchanged.

This present invention is adapted to use the IETF RFC 4423, Host Identity Protocol, as an MME to implicitly map the end users locations for example to spot beam id and/or GPS positions and/or identities that are operable to determine end user locations. Alternatively MiPv6 can be used for mobility management to achieve similar results.

The IP stack could also optionally support multi homing (using TCP or SCTP protocol) for the user to enable mobility management to ensure device mobility of the UTs or MSs.

Several methods can be employed in concert with the present invention to determine the physical location of the UT or MS. These methods use information configured in the GAN and information received from the UT during location update typically via a GPS location. It is conventionally known that GANC is operable to allow an external database to map this data to the exact geographical location of the end user in relation to the spot beam id and/or GPS position. The UT or MS can also be adapted to report the geographic location to the GANC.

There are several known techniques to improve transmission efficiency in the presence of long propagation delay. The present invention can be adapted to use such known techniques such as those available via commonly known TCP/IP accelerator products such as performance enhancing proxies and/or using XCP. In this manner, the present invention leverages the principles of 3GPP GAN network, is based on open standard interfaces, such as Up protocol stack, IP transport layers, and IETF RFC 4423 concerning Host Identity Protocol and uses conventional performance enhancing techniques to combat long propagation delay. In this manner, a BSC, either a Home BSC or GANC, can be used with minimum modifications or no changes.

As seen in Figures 5A and 5B, the MS platform 501 of a UT or MS 500 can be leveraged to incorporate satellite access in 3GPP GAN protocol domain. As seen in Figure 5B, the 3GPP GAN protocol architecture makes it feasible to support satellite enabled UTs or MSs with GAN/MSS internetworking unit 502. The present invention comprises an MSS/ATC solution as an ancillary satellite component in WCDMA/HSPA/GSM/EGPRS mobile networks with minimal impact to these networks. The impacts are minimized due to the use of IP protocol stack at the lowest level of protocol stack granularity.

As will be recognized by those skilled in the art, the innovative concepts described in the present application can be modified and varied over a wide range of applications. Accordingly, the scope of patented subject matter should not be limited to any of the specific exemplary teachings discussed above, but is instead defined by the following claims.

## Claims

1. A method of interfacing a User Terminal (UT) or Mobile Station (MS, 500) to a mobile telecommunications system, comprising the step of:
using a baseline standard to support a mobile satellite service (MSS) satellite component of the mobile telecommunications system at the physical, Radio Link Control (RLC) and Medium Access Control (MAC) layers with a conventional terrestrial standard for mobile communication to support Voice and packet Data services and applications.

2. The method of claim 1, wherein the baseline standard is the Third Generation Partnership Project (3GPP) Generic Access Network (GAN).

3. The method of claim 2, wherein the GAN protocol architecture is one selected from the group consisting of Up interface CS Voice bearer protocol, Up interface GPRS signaling and user plane protocol.

4. The method of claim 2, further comprising using the 3GPP GAN for roving and GAN cell identification using satellite access.

5. The method of claim 2, wherein the conventional terrestrial standards are based on the Generic Access Protocol architecture framework.

6. The method of claim 1, further comprising the steps of:
incorporating satellite component lower layers into a Generic Access Network (GAN) protocol architecture; and
leveraging the flexibility of the IP transport protocols between the UT or MS and the GAN Radio Access Network (RAN) to slide in satellite protocol lower layers in the GAN protocol architecture framework.

7. The method of claim 6, further comprising the step of using the IETF RFC 4423 protocol for Host Identity protocol and multi-homing support.

8. The method of claim 7, wherein using the IETF RFC 4423 protocol for Host Identity protocol and multi-homing support are transparent to the GAN infrastructure.

9. The method of claim 8, further comprising the step of using the IETF RFC 4423 Host Identity Protocol as a mobility management entity (MME) to implicitly map the end users locations to one from the group consisting of a spot beam id, Global Positioning Satellite (GPS) position and an identity that is operable to determine end user locations.

10. The method of claim 1, wherein the conventional terrestrial standard is one selected from the group consisting of Wideband Code Division Multiple Access (WCDMA), High Speed Packet Access (HSPA), Global System for Mobile Communication (GSM) and General Packet Radio Service (GPRS).

11. The method of claim 1, wherein the baseline standard is the Third Generation Partnership Project (3GPP) Generic Access Network (GAN); and
the satellite link is optimized for voice calls using a low data rate codec over the GAN user plane without Internet Protocol (IP) overhead.

12. The method of claim 11, further comprising the step of performing an encapsulation of a codec payload into Internet Protocol (IP) packets with Real Time Protocol (RTP) headers in the satellite Base Station Transceiver (BTS) as transparent connectivity to a base station controller (BSC).

13. A mobile telecommunications system, comprising:
a means in a User Terminal (UT) or Mobile Station (MS, 500) for using a baseline standard to support a mobile satellite service (MSS) satellite component of the mobile telecommunications system at the physical, Radio Link Control (RLC) and Medium Access Control (MAC) layers with a conventional terrestrial standard for mobile communication.

14. A User Terminal (UT, 500) for use in a mobile communications system, comprising a means for using a baseline standard to support a mobile satellite service (MSS) satellite component of the mobile telecommunications system at the physical, Radio Link Control (RLC) and Medium Access Control (MAC) layers with a conventional terrestrial standard for mobile communication.

## Patentansprüche

1. Ein Verfahren zum Verbinden eines Benutzerendgeräts (UT, User Terminal) oder Mobilstation (MS, 500) mit einem Mobiltelekommunikationssystem, umfassend den Schritte:
Verwenden eines Grundstandards zum Unterstützten einer Mobilsatellitendienst-(MSS, Mobile Satellite Service)-Satellitenkomponente des
Mobiltelekommunikationssystems bei der physikalischen, Radio-Link-Control-(RLC)- und Medium-Access-Control-(MAC)-Schicht mit einem herkömmlichen terrestrischen Standard für Mobilkommunikation zum Unterstützen von Sprach- und Paketdatendiensten und Anwendungen.

2. Das Verfahren nach Anspruch 1, wobei der Basisstandard das Third-Generation-Partnership-Projekt (3GPP) Generic-Access-Network (GAN) ist.

3. Das Verfahren nach Anspruch 2, wobei die GAN-Protokollarchitektur eine ist, ausgewählt von der Gruppe bestehend aus Up-Interface-CS-Voice-Bearer-Protocol, Up-Interface-GPRS-Signalisierung und Benutzerebenenprotokoll.

4. Das Verfahren nach Anspruch 2, ferner umfassend Verwenden des 3GPP-GAN zum Umherstreichen und GAN-Zellenidentifikation unter Verwendung von einem Satellitenzugang.

5. Das Verfahren nach Anspruch 2, wobei die herkömmlichen terrestrischen Standards basieren auf der Generic-Access-Protokollarchitektur-Grundstruktur.

6. Das Verfahren nach Anspruch 1, ferner umfassend die Schritte:
Einschließen einer Satellitenkomponente von unteren Schichten in eine Generic-Access-Network-(GAN)-Protokollarchitektur; und
Ausnutzen der Flexibilität der IP-Transportprotokolle zwischen dem UT oder MS und dem GAN Radio Access Network (RAN) zum Einschieben in ein Satellitenprotokoll von unteren Schichten in der GAN-Protokollarchitektur-Grundstruktur.

7. Das Verfahren nach Anspruch 6, ferner umfassend den Schritt eines Verwendens des IETF-RFC-4423-Protokolls als Host-Identity-Protokoll und Multi-Homing-Unterstützung.

8. Das Verfahren nach Anspruch 7, wobei Verwenden des IETF-RFC-4423-Protokolls als Host-Identity-Protokoll und Multi-Homing-Unterstützung transparent sind zu der GAN-Infrastruktur.

9. Das Verfahren nach Anspruch 8, ferner umfassend den Schritt eines Verwendens des IETF-RFC-4423-Host-Identity-Protokolls als Mobilitätsverwaltungsentität (MME, Mobility Management Entity) zum impliziten Abbilden der Endbenutzerorte auf eines von der Gruppe bestehend aus einer Punktstrahl-ID, Position eines globalen Positionierungssatellits (GPS) und einer Identität, die betreibbar ist zum Bestimmen von Endbenutzerorten.

10. Das Verfahren nach Anspruch 1, wobei der herkömmliche terrestrische Standard einer ist, ausgewählt von der Gruppe bestehend aus Wideband Code Division Multiple Access (WCDMA), High Speed Packet Access (HSPA), Global System for Mobile Communication (GSM) und General Packet Radio Service (GPRS).

11. Das Verfahren nach Anspruch 1, wobei der Grundstandard, das der Third Generation Partnership Project (3GPP) Generic Access Network (GAN) ist; und die Satellitenverbindung optimiert ist für Sprachanrufe unter Verwendung eines Codecs mit niedriger Datenrate über die GAN-Benutzerebene ohne Internet-Protokoll-(IP)-Overhead.

12. Das Verfahren nach Anspruch 11, ferner umfassend den Schritt eines Ausführens einer Einkapselung von einer Codec-Nutzlast in Internet-Protokoll-(IP)-Pakete mit Reelem-Zeit-Protokoll-(RTP)-Headern in dem Satellitenbasisstations-Transceiver (BTS) als transparente Verbindung mit einem Basisstations-Controller (BSC).

13. Ein Mobiltelekommunikationssystem, umfassend:
Mittel in einem Benutzerendgerät (UT, User Terminal) oder Mobilstation (MS, 500) zum Verwenden eines Grundstandards zum Unterstützten einer Mobilsatellitendienst-(MSS, Mobile Satellite Service)-Satellitenkomponente des Mobiltelekommunikationssystems bei der physikalischen, Radio-Link-Control-(RLC)- und Medium-Access-Control-(MAC)-Schicht mit einem herkömmlichen terrestrischen Standard für Mobilkommunikation.

14. Ein Benutzerendgerät (UT, 500) zur Verwendung in einem Mobiltelekommunikationssystem, umfassend Mittel zum Verwenden eines Grundstandards zum Unterstützten einer Mobilsatellitendienst-(MSS, Mobile Satellite Service)-Satellitenkomponente des Mobiltelekommunikationssystems bei der physikalischen, Radio-Link-Control-(RLC)- und Medium-Access-Control-(MAC)-Schicht mit einem herkömmlichen terrestrischen Standard für Mobilkommunikation.

## Revendications

1. Procédé pour mettre en interface un terminal d'utilisateur (UT) ou une station mobile (MS, 500) avec un système de télécommunications mobiles, comprenant l'étape consistant à :
utiliser une norme de référence pour supporter un composant de satellite de service de satellite mobile (MSS) du système de télécommunications mobiles au niveau des couches physiques de commande de liaison de radio (RLC) et de commandé d'accès au support (MAC) avec une norme terrestre classique pour communications mobiles afin de supporter des services et des applications vocales et de données par paquets.

2. Procédé selon la revendication 1, dans lequel la norme de référence est le réseau à accès générique (GAN) de projet de partenariat de troisième génération (3GPP).

3. Procédé selon la revendication 2, dans lequel l'architecture à protocole de réseau à accès générique est une architecture sélectionnée parmi le groupe comprenant le protocole de porteur de voix à circuit commuté à interface montante (Up interface CS Voice bearer protocol), la signalisation à service radio par paquets général (GPRS) à interface montante (Up interface GPRS signaling) et le protocole de plan d'utilisateur (user plane protocol).

4. Procédé selon la revendication 2, comprenant de plus l'utilisation du réseau à accès générique de projet de partenariat de troisième génération pour le surclassement et l'identification de cellule de réseau à accès générique à l'aide d'un accès par satellite.

5. Procédé selon la revendication 2, dans lequel les normes terrestres classiques sont basées sur la structure d'architecture de protocole à accès générique.

6. Procédé selon la revendication 1, comprenant de plus les étapes consistant à :
incorporer des couches inférieures de composants de satellite dans une architecture à protocole de réseau à accès générique (GAN) ; et
optimiser la souplesse des protocoles de transport à protocole internet (IP) entre le terminal d'utilisateur ou la station mobile et le réseau à accès par radio (RAN) de réseau à accès générique afin de glisser dans des couches inférieures de protocole de satellite dans la structure d'architecture de protocole de réseau à accès générique.

7. Procédé selon la revendication 6, comprenant de plus l'étape d'utilisation du protocole IETF RFC 4423 comme protocole d'identité d'hôte et support de guidage vers stations émettrices multiples (multi-homing support).

8. Procédé selon la revendication 7, dans lequel l'utilisation du protocole IETF RFC 4423 comme protocole d'identité d'hôte et support de guidage vers stations émettrices multiples est transparente pour l'infrastructure de réseau à accès générique.

9. Procédé selon la revendication 8, comprenant de plus l'étape d'utilisation du protocole d'identité d'hôte IETF RFC 4423 comme entité de gestion de mobilité (MME) pour cartographier de façon implicite les emplacements d'utilisateurs finaux vers l'une du groupe comprenant une identification de faisceau de points, une position de satellite de positionnement global (GPS) et une identité qui peut être utilisée pour déterminer des emplacements d'utilisateurs finaux.

10. Procédé selon la revendication 1, dans lequel la norme terrestre classique est une norme sélectionnée parmi le groupe comprenant l'accès multiple à division de code à large bande (WCDMA), l'accès par paquets à grande vitesse (HSPA), le système global pour communications mobiles (GSM) et le service radio par paquets général (GPRS).

11. Procédé selon la revendication 1, dans lequel la norme de référence est le réseau à accès générique (GAN) de projet de partenariat de troisième génération (3GPP) ; et
la liaison par satellite est optimisée pour des appels vocaux à l'aide d'un codec à bas débit de données sur le plan d'utilisateur de réseau à accès générique sans surdébit de protocole internet (IP).

12. Procédé selon la revendication 11, comprenant de plus l'étape de réalisation d'une encapsulation d'une charge utile de codec dans des paquets de protocole internet (IP) avec des en-têtes de protocole en temps réel (RTP) dans l'émetteur/récepteur de station de base (BTS) de satellite à titre de connectivité transparente pour un dispositif de commande de station de base (BSC).

13. Système de télécommunications mobiles, comprenant :
des moyens dans un terminal d'utilisateur (UT) ou une station mobile (MS, 500) pour utiliser une norme de référence pour supporter un composant de satellite de service de satellite mobile (MSS) du système de télécommunications mobiles au niveau des couches physiques de commande de liaison de radio (RLC) et de commande d'accès au support (MAC) avec une norme terrestre classique pour communications mobiles.

14. Terminal d'utilisateur (UT, 500) destiné à être utilisé dans un système de communications mobiles, comprenant des moyens pour l'utilisation d'une norme de référence pour supporter un composant de satellite de service de satellite mobile (MSS) du système de télécommunications mobiles au niveau des couches physiques de commande de liaison de radio (RLC) et de commande d'accès au support (MAC) avec une norme terrestre classique pour communications mobiles.
